# EUROPÄISCHE PATENTSCHRIFT

(11) **EP 3 438 330 B1**
(45) Veröffentlichungstag und Bekanntmachung des Hinweises auf die Patenterteilung: **17.04.2024**
(21) Anmeldenummer: 17184753.6
(22) Anmeldetag: 03.08.2017
(51) Int. Cl.: C25D 5/34, C25D 7/00, C25D 3/04, B21G 1/04, D05B 85/12, C25F 3/06, D04B 35/02, D04B 27/02, D04B 15/10, D04B 15/06, C25D 5/36

(54) **TEXTILMASCHINENWERKZEUGTEIL UND VERFAHREN ZUR HERSTELLUNG EINES TEXTILWERKZEUGS**
TEXTILE MACHINE COMPONENT AND METHOD FOR PRODUCING A TEXTILE TOOL
PARTIE D'OUTIL DE MACHINE TEXTILE ET PROCÉDÉ DE FABRICATION D'UN OUTIL TEXTILE

(43) Veröffentlichungstag der Anmeldung: 06.02.2019
(73) Patentinhaber: Groz-Beckert KG, 72458 Albstadt (DE)
(72) Erfinder: BUCK, Jochen, 72459 Albstadt (DE); GOLLER, Thomas, 72813 St. Johann (DE); BEIS, Sven, 72469 Meßstetten (DE)
(74) Vertreter: Rüger Abel Patentanwälte PartGmbB

(56) Entgegenhaltungen:
- WO-A1-2006/122895
- JP-A- 2008 106 302
- US-A- 5 642 632
- US-A1- 2007 062 762
- US-A1- 2015 147 586
- GACHOT C ET AL: "A critical assessment of surface texturing for friction and wear improvement", WEAR, ELSEVIER SEQUOIA, LAUSANNE, CH, vol. 372, 1 December 2016 (2016-12-01), pages 21-41, XP029897267, ISSN: 0043-1648, DOI: 10.1016/J.WEAR.2016.11.020

## Beschreibung

Die Erfindung betrifft ein Textilmaschinenwerkzeugteil umfassend Textilwerkzeuge wie beispielsweise Maschinenstricknadeln, Maschinenwirknadeln, Maschinennähnadeln, Maschinenfilznadeln, Maschinentuftingnadeln oder Systemteile einer Textilmaschine wie Platinen, Steuerungs- oder Kupplungsteile sowie Fadenführungssysteme oder Schlossteile, Zylinder und Rippscheiben. Solche Textilmaschinenwerkzeugteile können beispielsweise dazu vorgesehen sein, beim Verarbeiten von Garnen oder Fasern in Kontakt damit zu gelangen. Sie können dafür einen Arbeitsabschnitt, in dem das Textilmaschinenwerkzeugteil in Kontakt mit einem Garn oder Fasern gelangt, und einen Halteabschnitt aufweisen, mit dem das Textilmaschinenwerkzeugteil in der Textilmaschine gehalten, gelagert oder bewegt wird.

Solche Textilmaschinenwerkzeugteile werden beim Betrieb der Textilmaschine stark beansprucht. Ein Textilmaschinenwerkzeugteil kann beispielsweise einem großen Verschleiß unterworfen sein, wenn sogenannte abrasive Garne oder Fasern verarbeitet werden. Die Textilmaschinenwerkzeugteile können beim Betrieb der Textilmaschine auch relativ zueinander gleitend bewegt werden, wodurch ebenfalls Verschleiß auftreten kann. Ein solcher Verschleiß von Textilmaschinenwerkzeugteilen soll möglichst gering gehalten werden, um die Lebensdauer und die Effizienz der Textilmaschine zu erhöhen. Aus diesem Grund werden Textilmaschinenwerkzeugteile zumindest abschnittsweise mit einer Verschleißschutzschicht versehen.

Ein Textilmaschinenwerkzeugteil mit einer Chromschicht zur Verschleißminderung ist aus EP 1 988 200 A1 bekannt.

Ein Verfahren zur Beschichtung eines Textilmaschinenwerkzeugteils durch Nassplattieren und Trockenplattieren einer Oberfläche aus Kohlenstoffstahl wird in DE 44 91 289 T1 beschrieben. Um die Rauheit der Oberfläche des Kohlenstoffstahls zu verringern, wird diese zunächst poliert und anschließend die Verschleißschutzschicht aufgebracht.

DE 25 02 284 A1 beschreibt ein Verfahren zum Abscheiden von Chromschichten. Das Kernmaterial, auf dem die Chromschicht aufgebracht werden soll, wird zunächst durch Nassstrahlung mit Glasmehl vorbehandelt und anschließend die Chromschicht aufgebracht.

Aus EP 0 565 070 A1 ist ein Verfahren zum galvanischen Beschichten bekannt, wobei die elektrische Größe beim Galvanisieren einen Anfangs- sowie einen Folgeimpuls aufweist, um zunächst eine Keimbildung des Abscheidematerials durch den Anfangsimpuls zu erreichen und anschließend durch den Folgeimpuls eine weitere Anlagerung von Abscheidematerial am Anfangskeim herbeizuführen.

US 6,478,943 B1 offenbart ein Verfahren zum elektrochemischen Abscheiden, bei dem das Erzeugen einer strukturierten Oberfläche beim Abscheiden durch die Regelung eines pulsierenden Stromes erfolgt.

Auch das sogenannte "TOPOCROM"-Verfahren der TOPOCROM GmbH erzeugt eine strukturierte Oberfläche mit konvexen, kugelsegmentförmigen Oberflächenbereichen.

Zur Erhöhung der Härte einer Nadel schlägt DE 199 36 082 A1 vor, die Nadel vor und nach der Oberflächenbeschichtung durch Kugelstrahlen zu bearbeiten.

Bei dem Verfahren gemäß WO 2009/035444 A1 wird während der Oberflächenbeschichtung durch elektrochemisches Ätzen ein Teil der zuvor elektrochemisch aufgebrachten nanokristallinen Schicht wieder entfernt, um eine gewünschte Oberflächenstruktur zu erhalten.

Das aus DE 196 35 736 C2 bekannte Verfahren sieht vor, dass ein Textilmaschinenwerkzeugteil zunächst entfettet, eine Oxidschicht entfernt und anschließend beschichtet wird. Das Beschichten erfolgt durch eine plasmagestützte chemische Abscheidung, während der die Plasmaatmosphäre durch das Einstrahlen einer Radiofrequenz, mittels Gleichspannung oder gepulster Gleichspannung oder auch mit anderen Frequenzen angeregt.

DE 10 2011 119 335 B3 schlägt vor, einen Führungskanal einer Strickmaschine mit einer unebenen Oberfläche zu versehen, so dass sich ein Schmierstoffreservoir und ein entsprechender Schmierfilm an der Oberfläche des Führungskanals ausbilden kann.

JP 2008-106302 A beschreibt eine Nadel, bei der auf ein Kernmaterial eine Chrombeschichtung aufgebracht ist. Die Oberflächenrauheit soll gering sein und im Bereich von 0,015 pm bis 0,28 pm liegen.

US 5,642,632 A beschreibt ein Textilmaschinenwerkzeugteil mit einem Kern, der eine Beschichtung aufweist. Vor dem Aufbringen der Beschichtung wird der Kern gereinigt und geätzt.

Gachot C. et al.: "A critical assessement of surface texturing for friction and wear improvement", Wear 372-373 (2017), Seiten 21-41, Elsevier B.V., 2016 befasst sich mit der Texturierung von Oberflächen und den dabei entstehenden Kontakt- und Schmierzuständen.

Aus der Praxis ist auch eine sogenannte "DURALLOY"-Schicht bekannt, die eine Perlstruktur mit konvexkugelsegmentförmigen Erhebungen ausbildet. Auf diese "DURALLOY"-Schicht können zusätzliche Schichten, wie etwa eine Silberschicht, aufgebracht werden.

Es besteht nach wie vor ein Bedarf zur Optimierung der Oberfläche von Textilmaschinenwerkzeugteilen mit einem möglichst einfachen Verfahren. Es ist daher die Aufgabe der vorliegenden Erfindung ein Textilmaschinenwerkzeugteil mit verbesserten Oberflächeneigenschaften bereitzustellen, das eine hohe Lebensdauer aufweist und sich wirtschaftlich herstellen lässt.

Diese Aufgabe wird durch ein Textilmaschinenwerkzeugteil mit den Merkmalen des Patentanspruches 1, sowie ein Herstellungsverfahren mit den Merkmalen des Patentanspruches 12 gelöst. Eine erfindungsgemäße Verwendung dieses Textilmaschinenwerkzeugteils ist im Patentanspruch 9 angegeben.

Das Textilmaschinenwerkzeugteil hat einen Werkzeugkern, der aus einem Kernmaterial besteht. Das Kernmaterial ist insbesondere ein metallisches Material oder eine metallische Legierung, wie etwa eine Stahllegierung. Das Kernmaterial hat eine Kernoberfläche. Zumindest in einem Abschnitt dieser Kernoberfläche ist eine Mikrostruktur vorhanden. Die Mikrostruktur weist Vertiefungen und Erhebungen auf, die sich aneinander anschließen. Die Vertiefungen sind mit Blick auf die Kernoberfläche gegenüber einer Bezugsebene konkav vertieft ausgebildet, während die Erhebungen gegenüber dieser Bezugsebene konvex erhaben sind. Der Durchmesser einer Vertiefung und/oder Erhebung beträgt maximal 50-60 pm betragen. Der Abstand der Minima der Vertiefungen von den Maxima unmittelbar benachbarter Erhebungen beträgt maximal 40-60 pm und mindestens 10-20 pm.

Auf zumindest einen Abschnitt der mit der Mikrostruktur versehenen Kernoberfläche ist die Verschleißschutzschicht unmittelbar aufgebracht. Zwischenschichten zwischen der Kernoberfläche und der Verschleißschutzschicht sind nicht vorhanden. Die aufgebrachte Verschleißschutzschicht hat eine Schichtdicke von maximal 20 pm und vorzugsweise maximal 10 pm oder weiter vorzugsweise maximal 7 pm. Die Verschleißschutzschicht hat aufgrund der Mikrostruktur der Kernoberfläche ebenfalls eine Mikrostruktur, wobei die Abmessungen der Vertiefungen und Erhebungen insbesondere kleiner sind als die der Mikrostruktur der Kernoberfläche.

Durch die Ausprägung der Mikrostruktur auf der Kernoberfläche und das unmittelbare Aufbringen der Verschleißschutzschicht mit einer Schichtdicke von maximal 20 µm, ist dort ebenfalls eine Mikrostruktur ausgebildet. Die Abmessungen der Vertiefungen und der Erhebungen der Mikrostruktur der Verschleißschutzschicht hängen von der Dimensionierung der Vertiefungen und Erhebungen der Mikrostruktur der Kernoberfläche ab. Durch eine entsprechende Dimensionierung kann daher die Oberfläche oder Außenfläche der Verschleißschutzschicht definiert werden. Es lassen sich dadurch sehr gezielt gewünschte Mikrostrukturen an der Oberfläche der Verschleißschutzschicht einstellen, insbesondere wenn die Mikrostruktur des Kernmaterials durch elektrochemisches Ätzen erzeugt wird. Außerdem entsteht durch die Mikrostrukturierung der Kernoberfläche ein guter Haftverband zwischen der Verschleißschutzschicht und dem Kernmaterial, der auch bei der Bildung von feinen Rissen in der Verschleißschutzschicht eine gute Haftung der Verschleißschutzschicht am Kernmaterial aufrecht erhält und Abplatzungen der Verschleißschutzschicht minimiert.

Die Oberflächenstruktur der Verschleißschutzschicht ist an die verschiedenen textilen Anwendungen und an die speziellen verwendeten Garne bzw. Fasern angepasst. Generell führt die Oberflächenstruktur zu einer reduzierten Kontaktfläche zwischen dem Garn bzw. Fasern. Bei Lochnadeln zum Beispiel wirkt sich besonders vorteilhaft auf den Verschleiß an den Lochnadeln aus, wenn elastische Garne bzw. Fasern verwendet werden. Durch die reduzierte Kontaktlänge bauen sich in den elastischen Garnen bzw. Fasern weniger Spannungen auf, die den Verschleiß an den Lochnadeln erhöhen, aber auch zu Beschädigungen an der Garnen bzw. Fasern selbst führen können.

Außerdem wird durch die sehr dünne Schicht die Geometrie der faden- bzw. garnführenden Werkzeuge nicht maßgeblich beeinflusst. Zum Beispiel verändert eine solch dünne Schicht bei sehr kleinen Kerben (wenige hundertstel Millimeter) an Filznadeln noch nicht die Wirkung der Kerbe beim Fasertransport. Durch die Struktur der Schicht und die damit verbundene Reduzierung der Kontaktfläche werden aber wiederum die Nadel und die Fasern weniger belastet. Da bei solch kleinen geformten Strukturen das Schichtwachstum nicht an allen Stellen (einer Kerbe) unabhängig kontrolliert werden kann, weisen die dünnen Schichten umso mehr Vorteile auf, weil die Auswirkungen lokal unterschiedlichen Schichtwachstums bei dünneren Schichten weniger ins Gewicht fallen. Bei den filigranen textilen Werkzeugen sind die bekannten strukturierten Schichten aufgrund der nötigen Mindestschichtdicken ungeeignet. Bei Lochnadeln liegt die Verrundung im Loch bei kleiner ca. 100µm, was bei dickeren Schichten (über 20pm) bereits zu Wülsten führen würde. Ähnliche Verhältnisse liegen beim Öhr oder bei den Rinnenkanten von Nähnadeln vor.

Es ist bevorzugt, wenn die Schichtdicke der Verschleißschutzschicht im Wesentlichen konstant ist und innerhalb einer betrachteten Fläche mit einer Größe von 1 mm² (vorzugsweise 1 mm x 1 mm) um maximal 1 µm und/oder um maximal 10% variiert.

Die Schichtdicke der Verschleißschutzschicht beträgt mindestens 1 pm. Diese Mindestschichtdicke kann in einer Randzone abnehmen, in der die Verschleißschutzschicht zu einem unbeschichteten Abschnitt des Werkzeugkerns ausläuft. Außerhalb dieser Randzone ist an jeder Stelle die Mindestschichtdicke erreicht.

Bei einem bevorzugten Ausführungsbeispiel ist die Verschleißschutzschicht durch eine Chromschicht, vorzugsweise eine Hartchromschicht gebildet. Die Verschleißschutzschicht kann auch durch eine DLC-Schicht oder eine carbidische Schicht oder eine nitridische Schicht gebildet sein. Vorteilhaft können als Verschleißschutzschicht auch andere verfügbare Hartstoffschichten verwendet werden, wie z.B. oxidische, carbonitridische oder oxinitridische Hartstoffschichten und weitere. Es kann auch vorteilhaft sein, in unterschiedlichen Abschnitten des Werkzeugkerns Verschleißschutzschichten aus unterschiedlichem Material aufzubringen.

Erfindungsgemäß hat die Mikrostruktur der Verschleißschutzschicht Erhebungen (Berge) und/oder Vertiefungen (Täler), die im Bereich ihres Maximums bzw. Minimums jeweils in etwa eine kugelflächenabschnittförmige Kontur aufweisen. Es ist bevorzugt, wenn ein Querschnitt durch die Mikrostruktur eine stetige Kurve darstellt, deren erste Ableitung (Steigung) an jeder Stelle ebenfalls stetig ist. Bei dieser Ausgestaltung ist es auch möglich, wenn der mittlere Radius einer kugelflächenabschnittförmigen Kontur einer Erhebung größer oder kleiner ist als der mittlere Radius einer kugelflächenabschnittförmigen Kontur einer Vertiefung.

Das Textilmaschinenwerkzeugteil kann bevorzugt in Textilmaschinen bei der Verarbeitung von Elastangarnen verwendet werden, beispielsweise im Bademodenbereich. Das Elastangarn hat vorzugsweise eine Feinheit im Bereich von etwa 20 den (22 dtex) bis 40 den (44 dtex). Solche Garne sind sehr fein. Beispielsweise beträgt der Durchmesser eines Elastangarns der Feinheit 22 dtex ca. 0,04 mm.

Ein Textilmaschinenwerkzeugteil, insbesondere gemäß der vorstehenden Beschreibung, kann durch ein Verfahren mit folgenden Schritten hergestellt werden:

Zunächst wird ein Werkzeugkern aus einem Kernmaterial in der gewünschten Form hergestellt. Anschließend wird zumindest auf einem Abschnitt der Kernoberfläche des Werkzeugkerns eine Mikrostruktur erzeugt. Zumindest auf einen Abschnitt der die Mikrostruktur aufweisenden Kernoberfläche wird dann unmittelbar eine Verschleißschutzschicht aufgebracht, die eine Schichtdicke von maximal 20 pm aufweist.

Die Mikrostruktur wird durch ein elektrochemisches Ätzverfahren erzeugt, indem der Werkzeugkern in ein Bad getaucht wird und die Anode bildet, während eine Chromsäurelösung des Bades die Kathode darstellt, so dass Kernmaterial von dem Werkzeugkern abgelöst wird und in das Bad übergeht. Vorzugsweise wird unmittelbar nach dem Erzeugen der Mikrostruktur auf der Kernoberfläche die Verschleißschutzschicht erzeugt, insbesondere durch elektrochemisches Abscheiden. Dabei kann der Werkzeugkern nach dem Erzeugen der Mikrostruktur ohne weiteren Zwischenschritt, wie etwa Trocknen, in ein Bad (insbesondere Chrombad) getaucht werden und als Kathode dienen, so dass sich Chrom an der Kernoberfläche ablagert. Die beiden elektrochemischen Verfahren werden sozusagen "nass in nass" durchgeführt. Vorzugsweise werden zwei unterschiedliche Bädereinrichtungen für diese beiden Verfahrensschritte verwendet.

Weitere vorteilhafte Ausgestaltungen des Textilmaschinenwerkzeugs bzw. des Verfahrens zu dessen Herstellung ergeben sich aus den abhängigen Patentansprüchen, der Beschreibung und den Zeichnungen. Nachfolgend werden bevorzugte Ausführungsbeispiele der Erfindung anhand der beigefügten Zeichnung im Einzelnen erläutert. Es zeigen:
Figur 1 ein Beispiel eines Textilmaschinenwerkzeugteils, das durch eine Lochnadel gebildet ist, in einer Seitenansicht,
Figur 2 eine geschnittene Teilansicht der Lochnadel aus Figur 1 gemäß Schnittlinie II-II in Figur 1,
Figur 3 eine schematische Darstellung eines Teilbereichs III in Figur 2, der einen Teil des Werkzeugkerns und der auf dem Werkzeugkern aufgebrachten Verschleißschutzschicht in einer stark vereinfachten Querschnittsdarstellung zeigt,
Figur 4 eine perspektivische, fotographische Teildarstellung der Lochnadel aus Figur 1, die eine Verschleißschutzschicht mit einer Mikrostruktur zeigt und
Figur 5 einen Teilbereich IV der Verschleißschutzschicht der Lochnadel aus Figur 4 und
Figur 6 ein Flussdiagramm eines beispielhaften Verfahrens zur Herstellung eines Textilmaschinenwerkzeugteils, beispielsweise der Lochnadel gemäß der Figuren 1-5.

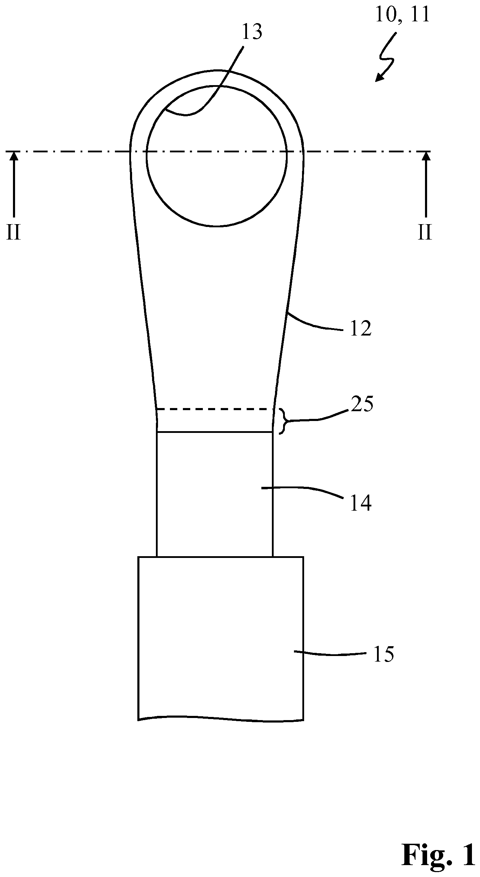

Figur 1 zeigt eine schematische Seitenansicht einer Lochnadel 10, die ein Textilmaschinenwerkzeugteil 11 bildet. Anstelle einer Lochnadel 10 kann das Textilmaschinenwerkzeugteil auch durch eine andere Nadel, wie etwa eine Maschinenstricknadel, eine Maschinennähnadel, eine Maschinenfilznadel oder eine Maschinentuftingnadel gebildet sein. Anstelle von einer Nadel kann das Textilmaschinenwerkzeugteil auch durch ein Systemteil einer Textilmaschine gebildet sein, beispielsweise durch eine Platine, ein Fadenführungssystemteil oder ein Steuerungs- oder Kupplungsteil. Bei dem Textilmaschinenwerkzeugteil handelt es sich insbesondere um ein an der Textilmaschine angebrachtes Werkzeug- oder Systemteil, das in der Textilmaschine für die Verarbeitung von Fasern bzw. Garnen vorhanden ist und beispielsweise beim Betrieb mit dem Garn oder den Fasern in Kontakt gelangen kann.

Die Lochnadel 10 weist beispielsgemäß einen Arbeitsabschnitt 12 auf, indem die Lochnadel 10 ein Loch 13 zur Führung eines Fadens bzw. eines Garns aufweist. An den Arbeitsabschnitt 12 mit dem Loch 13 schließt sich ein Halteabschnitt 14 an, mittels dem die Lochnadel 10 an einem Nadelhalter 15 befestigt ist. An einem solchen Nadelhalter 15 sind in der Regel eine Mehrzahl von Lochnadeln 10 mit fluchtenden Löchern 13 angeordnet.

Auch andere Textilmaschinenwerkzeugteile bzw. Textilwerkzeuge weisen einen Arbeitsabschnitt 12 und einen Halteabschnitt 14 auf. Beispielsweise hat eine Maschinennähnadel oder eine Maschinenfilznadel einen Arbeitsabschnitt mit der Nadelspitze und einen Halteabschnitt im Bereich des Nadelschaftes, mittels den die Nadel in der Maschine gehalten wird. Eine Strickmaschinennadel hat einen Arbeitsabschnitt mit dem Nadelhaken und weist mit Abstand dazu einen Halteabschnitt mit einem Fußteil oder dergleichen auf, mittels dem die Maschinenstricknadel beispielsweise in einem Führungskanal der Strickmaschine bewegt werden kann. Auch Platinen oder andere Systemteile können einen Arbeitsabschnitt aufweisen, der mit einem Garn in Kontakt gelangt sowie einen Halteabschnitt, mittels dem das jeweilige Teil gelagert oder fixiert oder zur Bewegung beaufschlagt wird.

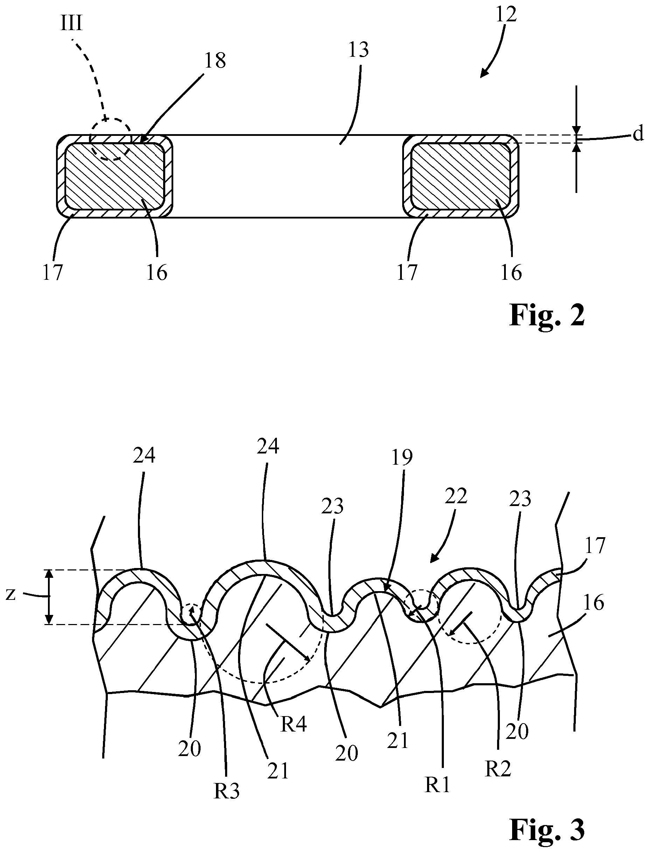

In Figur 2 ist eine teilgeschnittene Darstellung gemäß der Schnittlinie II-II durch das Loch 13 (siehe Figur 1) veranschaulicht. Dort ist zu erkennen, dass die Lochnadel 10 zumindest im Arbeitsabschnitt 12 einen Werkzeugkern 16 aus einem Kernmaterial und eine unmittelbar auf den Werkzeugkern 16 aufgebrachte Verschleißschutzschicht 17 aus einem von dem Kernmaterial verschiedenen anderen Material aufweist. Das Kernmaterial ist vorzugsweise durch ein Metall oder eine metallische Legierung gebildet und besteht beispielsgemäß aus einer Stahllegierung. Die Verschleißschutzschicht 17 ist beim Ausführungsbeispiel durch eine Hartchromschicht gebildet. Sie kann alternativ auch eine DLC-Schicht, eine carbidische Schicht oder eine nitridische Schicht sein.

Die Verschleißschutzschicht 17 ist beispielsgemäß lediglich im Arbeitsabschnitt 12 der Lochnadel 10 bzw. des Textilmaschinenwerkzeugteils 11 aufgebracht. Andere Bereiche, beispielsweise der Halteabschnitt 14, sind nicht mit der Verschleißschutzschicht 17 bedeckt. Abhängig von der genauen Funktion des jeweiligen Textilmaschinenwerkzeugteils kann es ausreichend sein, lediglich einen einem Verschleiß unterliegenden Abschnitt mit der Verschleißschutzschicht 17 zu versehen. Es ist aber auch möglich, das gesamte Textilmaschinenwerkzeugteil 11 mit der Verschleißschutzschicht 17 zu beschichten.

Die Verschleißschutzschicht 17 ist unmittelbar ohne weitere Zwischenschicht auf das Kernmaterial des Werkzeugkerns 16 aufgebracht. In dem Abschnitt, in dem die Verschleißschutzschicht 17 aufgebracht wird, hat eine Kernoberfläche 18 des Kernmaterials 16 eine erste Mikrostruktur 19. Die erste Mikrostruktur 19 ist stark schematisiert in Figur 3 veranschaulicht, die einen vergrößerten Ausschnitt (Bereich III in Figur 2) des Kernmaterials und der Verschleißschutzschicht 17 zeigt. Die Darstellung der Figur 3 ist stark vereinfacht und nicht maßstabsgetreu. Wie zu erkennen ist, ist die erste Mikrostruktur 19 durch nebeneinander angeordnete konkave erste Vertiefungen 20 und konvexe erste Erhebungen 21 an der Kernoberfläche 18 gebildet. Die ersten Vertiefungen 20 und/oder die ersten Erhebungen 21 haben eine kugelflächenabschnittförmige, sphärische Kontur mit einem jeweiligen Radius Ri, wobei i einen Index darstellt, der die Zuordnung des betreffenden Radius zu einer jeweiligen ersten Vertiefung 20 bzw. ersten Erhebung 21 beschreibt. In Figur 3 ist beispielhaft ein erster Radius R1 für eine erste Vertiefung 20 und ein zweiter Radius R2 für eine erste Erhebung 21 veranschaulicht

Auf diese erste Mikrostruktur 19 ist die Verschleißschutzschicht 17 aufgebracht. Die Schichtdicke d der Verschleißschutzschicht 17 beträgt mindestens 2 pm und maximal 20 pm. Bei weiteren Ausführungsbeispielen kann die Schichtdicke d der Verschleißschutzschicht 17 auch maximal 10 µm oder maximal 7 pm betragen.

Aufgrund dieser Schichtdicke d der Verschleißschutzschicht 17 bildet diese ebenfalls eine Mikrostruktur aus, die hier als zweite Mikrostruktur 22 bezeichnet wird. Analog zur ersten Mikrostruktur 19 bildet die zweite Mikrostruktur 22 somit zweite Vertiefungen 22 und zweite Erhebungen 24, die aneinander anschließen. Analog zur ersten Mikrostruktur 19 haben die zweiten Vertiefungen 23 und die zweiten Erhebungen 24 jeweils eine kugelflächenabschnittförmige Kontur mit einem jeweiligen Radius Ri, wobei in Figur 3 beispielhaft ein dritter Radius R3 für eine zweite Vertiefung 23 und ein vierter Radius R5 für eine zweite Erhebung 24 eingetragen sind.

In einem Querschnitt durch die erste Mikrostruktur 19 der Kernoberfläche 18 und der zweiten Mikrostruktur 22 der Verschleißschutzschicht 17 (Figur 3) betrachtet haben die Querschnittskonturlinien der Mikrostrukturen 19, 22 einen stetigen Verlauf. Vorzugsweise ist auch deren Steigung (erste Ableitung) an jeder Stelle des Verlaufs der Querschnittskonturlinien der Mikrostrukturen 19 bzw. 22 stetig.

In Abwandlung zur schematischen Ausführung nach Figur 3 können auch jeweils nur die Vertiefungen 20 bzw. 23 oder nur die Erhebungen 21 bzw. 24 der jeweiligen Mikrostruktur 19 bzw. 22 eine kugelflächenabschnittförmige Gestalt aufweisen. Die Radii der ersten und zweiten Vertiefungen 20, 23 und/oder der den ersten und zweiten Erhebungen 21, 24 können in einem vorgegebenen Bereich variieren und betragen beispielsweise maximal 20-30 pm und minimal 5-10 pm. Ein Abstand z eines Minima einer zweiten Vertiefung 23 von den Maxima unmittelbar benachbarter zweiter Erhebungen beträgt vorzugsweise maximal 40-60 pm und mindestens 10-20 pm.

Die Schichtdicke d der Verschleißschutzschicht 17 ist im Wesentlichen konstant. Innerhalb einer betrachteten Fläche von der Größe von 1 mm², vorzugsweise einer rechteckigen Fläche von 1 mm x 1 mm, weicht die Schichtdicke d maximal um 10% oder maximal um 1 pm ab. Die Angaben für die Schichtdicke d gelten für die gesamte Verschleißschutzschicht 17 außerhalb einer sich an einen Rand 26 der Verschleißschutzschicht 17 unmittelbar anschließenden Randzone 25. Innerhalb dieser Randzone 25 verringert sich die Schichtdicke d kontinuierlich zum Rand 26 der Verschleißschutzschicht hin.

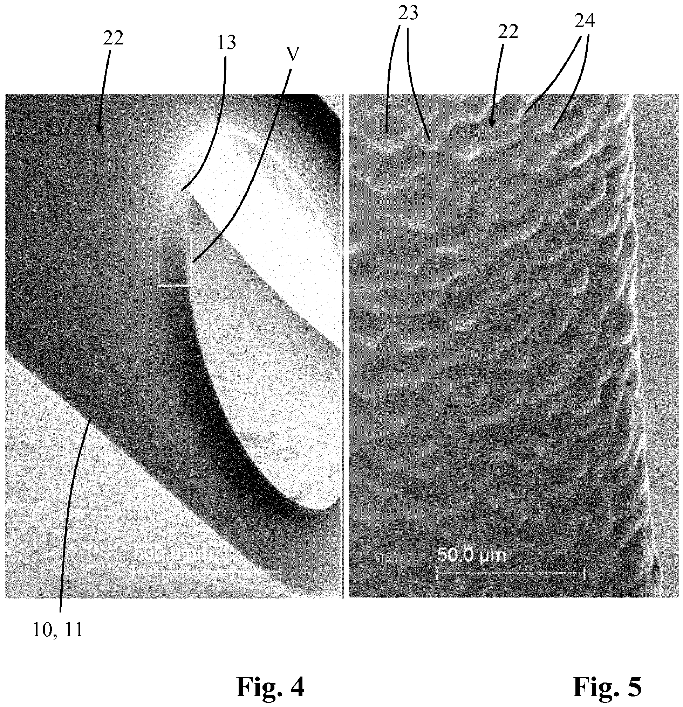

In Figur 4 und in Figur 5 ist die zweite Mikrostruktur 22 der Verschleißschutzschicht 17 fotografisch dargestellt. Bei diesem Ausführungsbeispiel haben lediglich die zweiten Erhebungen 24 eine kugelflächenabschnittförmige Kontur im Bereich ihres jeweiligen Maximums, nicht jedoch die Vertiefungen 23.

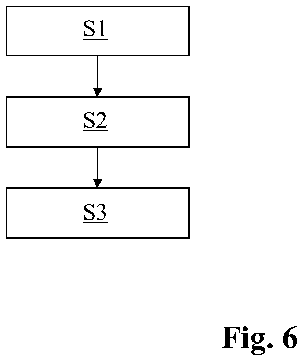

Anhand von Figur 6 wird nachfolgend ein bevorzugtes Verfahren zur Herstellung eines Textilmaschinenwerkzeugteils 11 und beispielsgemäß der vorstehend beschriebenen Lochnadel 10 erläutert.

In einem ersten Verfahrensschritt S1 wird der Werkzeugkern 16 aus Kernmaterial hergestellt, beispielsweise durch Umformen und/oder mechanisches Bearbeiten eines Kernmaterials. Der Werkzeugkern 16 erhält die entsprechende Form, die die Form des späteren Textilmaschinenwerkzeugteils 11 und beispielsgemäß der Lochnadel 10 bestimmt.

Anschließend wird zumindest in einen Abschnitt der Kernoberfläche 18 des Werkzeugkerns 16 in einem zweiten Verfahrensschritt S2 die erste Mikrostruktur 19 erzeugt, erfindungsgemäß durch ein elektrochemisches Ätzverfahren. Hierfür wird eine Chromsäurelösung mit 50-300 g Chromtrioxid pro Liter bei einer Temperatur von 20°C bis 60° verwendet. Die Verweildauer des Werkzeugkerns 16 im Bad beträgt abhängig von der zu erzeugenden Tiefe bzw. Höhe der ersten Vertiefungen 20 und der ersten Erhebungen 21 zwischen 10 Sekunden bis zu 1800 Sekunden. Dabei wird der Werkzeugkern 16 als Anode verwendet (positiver Pol der Spannung), wodurch Kernmaterial an der Kernoberfläche abgelöst wird und in die elektrolytische Lösung übergeht. Schwerer lösliche Bestandteile des Gefüges des Kernmaterials gehen dabei weniger schnell in die Lösung über. Bei Ätzen der ersten Mikrostruktur 19 wird eine Stromdichte von 20-40 A/dm² verwendet, wobei die Ätzdauer 30 Sekunden bis 1200 Sekunden beträgt. Über die Ätzdauer und die Stromdichte kann die gewünschte erste Mikrostruktur 19 dimensioniert werden.

Dadurch, dass die erste Mikrostruktur durch ein Ätzverfahren erzeugt wird, kann unmittelbar nach dem zweiten Verfahrensschritt S2 in einem dritten Verfahrensschritt S3 die Verschleißschutzschicht 17 "nass in nass" aufgebracht werden. Eine Trocknung oder andere Zwischenschritte finden während dem zweiten Verfahrensschritt S2 und dem dritten Verfahrensschritt S3 beispielsgemäß nicht statt. Beim Ausführungsbeispiel wird als Verschleißschutzschicht 17 eine Hartchrombeschichtung durch elektrochemische Abscheidung aufgebracht. Dabei wird zumindest ein Abschnitt des die erste Mikrostruktur 19 aufweisenden Werkzeugkerns 16 in ein elektrolytisches Bad getaucht, wobei der Werkzeugkern 16 als Kathode (negative Polung) dient, so dass sich Material aus dem Bad auf der Kernoberfläche 18 mit der ersten Mikrostruktur 19 anlagert. Das Bad enthält beispielsweise 170 - 270 g Chromtrioxid pro Liter, 0,5 - 2,5 Gew.-% Schwefelsäure und einen Sonderkatalysator. Der Sonderkatalysator kann beispielsweise eine Sulfonsäure sein und eine Konzentration im Bereich von 1:10 - 1:20 bezogen auf den Chromtrioxidgehalt des Chrombades aufweisen. Die Temperatur des Bades beträgt 50°C bis 70°C. Als Sulfonsäure kann Methan-, Dimethan- oder Naphthalinsulfonsäure verwendet werden. Die Stromdichte beträgt beispielsweise 15-50 A/dm². Die Verweildauer im elektrolytischen Bad wird so gewählt, dass die Verschleißschutzschicht 17 eine Schichtdicke von maximal 20 pm oder maximal 10 pm und vorzugsweise maximal 7 pm aufweist. Die Mindestschichtdicke beträgt 1 pm. Während des Beschichtens mit der Verschleißschutzschicht 17 durch elektrochemische Abscheidung kann durch einen pulsförmigen Stromverlauf, die Stromdichte, die Temperatur, die Badkonzentration und weitere Parameter die Gestalt der zweiten Mikrostruktur 22 beeinflusst werden. Die zweite Mikrostruktur 22 hängt von den genannten Beschichtungsparametern und außerdem von der Dimensionierung und Ausführung der ersten Mikrostruktur 19 an der Kernoberfläche 18 ab. Es können beispielsweise Erhebungen und Vertiefungen (Berge und Täler) der zweiten Mikrostruktur 22 gebildet werden, die halbkugelähnliche Konturen aufweisen.

Die Erfindung betrifft ein Textilmaschinenwerkzeugteil 11, das bei der Textilbearbeitung in einer Textilmaschine verwendet wird, sowie ein Verfahren zu dessen Herstellung. Das Textilmaschinenwerkzeugteil 11 hat einen Werkzeugkern 16 aus einem Kernmaterial, der zumindest teilweise mit einer Verschleißschutzschicht beschichtet wird. Die Verschleißschutzschicht 17 wird auf eine Kernoberfläche 18 aufgebracht, die eine erste Mikrostruktur 19 aufweist. Die erste Mikrostruktur 19 wird durch elektrochemisches Ätzen in der Kernoberfläche 18 erzeugt. Die darauf aufgebrachte Verschleißschutzschicht 17 wird vorzugsweise durch elektrochemisches Abscheiden unmittelbar auf die die erste Mikrostruktur 19 aufweisende Kernoberfläche 18 zumindest abschnittsweise aufgebracht und hat eine Schichtdicke von maximal 20 µm.

### Bezugszeichenliste:

- 10: Lochnadel
- 11: Textilmaschinenwerkzeugteil
- 12: Arbeitsabschnitt
- 13: Loch
- 14: Halteabschnitt
- 15: Nadelhalter
- 16: Werkzeugkern
- 17: Verschleißschutzschicht
- 18: Kernoberfläche
- 19: erste Mikrostruktur
- 20: erste Vertiefung
- 21: erste Erhebung
- 22: zweite Mikrostruktur
- 23: zweite Vertiefung
- 24: zweite Erhebung
- 25: Randzone
- 26: Rand

- d: Schichtdicke
- Ri: Radius
- R1: erster Radius
- R2: zweiter Radius
- R3: dritter Radius
- R4: vierter Radius
- S1: erster Verfahrensschritt
- S2: zweiter Verfahrensschritt
- S3: dritter Verfahrensschritt
- z: Abstand

## Patentansprüche

1. Textilmaschinenwerkzeugteil (11) aufweisend einem Werkzeugkern (16), der aus einem Kernmaterial besteht,
wobei der Werkzeugkern (16) zumindest in einem Abschnitt eine Kernoberfläche (18) mit einer Mikrostruktur (19) aufweist, die durch ein elektrochemisches Ätzverfahren hergestellt wurde, wobei der Werkzeugkern (16) als Anode in einem Bad aus Chromsäurelösung mit 50-300 g Chromtrioxid pro Liter verwendet wird, eine Verweildauer des Werkzeugkerns (16) im Bad abhängig von einer zu erzeugenden Tiefe bzw. Höhe von Vertiefungen (20) und Erhebungen (21) der Mikrostruktur (19) zwischen 10 Sekunden bis zu 1800 Sekunden beträgt, bei einer Temperatur von 20°C bis 60°C, einer Stromdichte von 20-40 A/dm² und einer Ätzdauer von 30 Sekunden bis 1200 Sekunden,
wobei sich die Vertiefungen (20) und Erhebungen (21) der Mikrostruktur (19) der Kernoberfläche (18) aneinander anschließen, wobei die Erhebungen (21) im Bereich ihres jeweiligen Maximums und die Vertiefungen (20) im Bereich ihres jeweiligen Minimums eine kugelflächenabschnittförmige Kontur aufweisen, wobei die Vertiefungen mit Blick auf die Kernoberfläche gegenüber einer Bezugsebene konkav vertieft ausgebildet, während die Erhebungen gegenüber dieser Bezugsebene konvex erhaben sind, wobei der Durchmesser jeder Vertiefung und jeder Erhebung maximal 50-60 pm beträgt und wobei der Abstand der Minima der Vertiefungen von den Maxima unmittelbar benachbarter Erhebungen mindestens 10-20 pm und maximal 40-60 pm beträgt,
wobei die Kernoberfläche (18) mit der Mikrostruktur (19) zumindest teilweise mit einer Verschleißschutzschicht (17) beschichtet ist, die eine Schichtdicke (d) von maximal 20 pm aufweist und wobei die Verschleißschutzschicht (17) wegen der Mikrostruktur (19) der Kernoberfläche (18) ebenfalls eine Mikrostruktur (22) aufweist.

2. Textilmaschinenwerkzeugteil nach Anspruch 1,
**dadurch gekennzeichnet, dass** die Vertiefungen und Erhebungen der Mikrostruktur (19) der Kernoberfläche (18) jeweils einen Radius von minimal 5-10 pm und maximal 20-30 pm aufweisen.

3. Textilmaschinenwerkzeugteil nach Anspruch 1 oder 2,
**dadurch gekennzeichnet, dass** die Schichtdicke (d) der Verschleißschutzschicht (17) maximal 10 µm oder maximal 7 pm beträgt.

4. Textilmaschinenwerkzeugteil nach einem der Ansprüche 1 bis 3,
**dadurch gekennzeichnet, dass** die Schichtdicke (d) der Verschleißschutzschicht (17) innerhalb einer betrachteten Fläche von 1 mm² um maximal 1µm variiert.

5. Textilmaschinenwerkzeugteil nach einem der vorhergehenden Ansprüche,
**dadurch gekennzeichnet, dass** die Schichtdicke (d) der Verschleißschutzschicht (17) mindestens 2 pm beträgt.

6. Textilmaschinenwerkzeugteil nach einem der vorhergehenden Ansprüche,
**dadurch gekennzeichnet, dass** die Verschleißschutzschicht (17) eine Chromschicht oder eine DLC-Schicht oder eine carbidische Schicht oder eine nitridische Schicht ist und/oder dass das Kernmaterial von einem metallischen Material oder einer metallischen Legierung gebildet ist.

7. Textilmaschinenwerkzeugteil nach einem der vorhergehenden Ansprüche,
**dadurch gekennzeichnet, dass** die Mikrostruktur (22) der Verschleißschutzschicht (17) Erhebungen (21, 24) und Vertiefungen (20, 23) aufweist, wobei die Erhebungen (21, 24) im Bereich ihres jeweiligen Maximums und die Vertiefungen (20, 23) im Bereich ihres jeweiligen Minimums eine kugelflächenabschnittförmige Kontur aufweisen.

8. Textilmaschinenwerkzeugteil nach Anspruch 7,
**dadurch gekennzeichnet, dass** der Radius (R2, R4) einer kugelflächenabschnittförmigen Kontur einer ersten oder zweiten Erhebung (21, 24) größer ist als der Radius (R1, R3) einer kugelflächenabschnittförmigen Kontur einer ersten oder zweiten Vertiefung (20, 23).

9. Verwenden des Textilmaschinenwerkzeugteils (10) nach einem der vorhergehenden Ansprüche in einer Textilmaschine bei einem Verfahren zur Herstellung oder Bearbeitung eines Textilmaterials mit wenigstens einem Elastangarn, das mit dem Textilmaschinenwerkzeugteil (10) in Kontakt gelangt.

10. Verwendung des Textilmaschinenwerkzeugteils (10) nach Anspruch 9,
**dadurch gekennzeichnet, dass** das wenigstens eine Elastangarn eine Feinheit von mindestens 20 den oder 22 dtex aufweist.

11. Verwendung des Textilmaschinenwerkzeugteils (10) nach Anspruch 9 oder 10,
**dadurch gekennzeichnet, dass** das wenigstens eine Elastangarn eine Feinheit von maximal 40 den oder 44 dtex aufweist.

12. Verfahren zur Herstellung eines Textilmaschinenwerkzeugteils mit folgenden Schritten:
- Herstellen eines Werkzeugkerns (16) aus einem Kernmaterial,
- Erzeugen einer Mikrostruktur (19) zumindest in einem Abschnitt der Kernoberfläche (28) des Werkzeugkerns (16), die durch ein elektrochemisches Ätzverfahren hergestellt wurde, wobei der Werkzeugkern (16) als Anode in einem Bad aus Chromsäurelösung mit 50-300 g Chromtrioxid pro Liter verwendet wird, eine Verweildauer des Werkzeugkerns (16) im Bad abhängig von einer zu erzeugenden Tiefe bzw. Höhe von Vertiefungen (20) und Erhebungen (21) der Mikrostruktur (19) zwischen 10 Sekunden bis zu 1800 Sekunden beträgt, bei einer Temperatur von 20°C bis 60°C, einer Stromdichte von 20-40 A/dm² und einer Ätzdauer von 30 Sekunden bis 1200 Sekunden, wobei sich die Vertiefungen (20) und Erhebungen (21) der Mikrostruktur (19) der Kernoberfläche (18) aneinander anschließen, wobei die Erhebungen (21) im Bereich ihres jeweiligen Maximums und die Vertiefungen (20) im Bereich ihres jeweiligen Minimums eine kugelflächenabschnittförmige Kontur aufweisen, wobei die Vertiefungen mit Blick auf die Kernoberfläche gegenüber einer Bezugsebene konkav vertieft ausgebildet, während die Erhebungen gegenüber dieser Bezugsebene konvex erhaben sind, wobei der Durchmesser einer Vertiefung und/oder Erhebung maximal 50-60 pm beträgt und wobei der Abstand der Minima der Vertiefungen von den Maxima unmittelbar benachbarter Erhebungen mindestens 10-20 µm und maximal 40-60 µm beträgt,
- und zumindest teilweises Beschichten der Kernoberfläche (18) mit der Mikrostruktur (19) mit einer Verschleißschutzschicht (17), die eine Schichtdicke (d) von maximal 20 µm aufweist, derart, dass die Verschleißschutzschicht (17) wegen der Mikrostruktur (19) der Kernoberfläche (18) ebenfalls eine Mikrostruktur (22) aufweist.

13. Verfahren nach Anspruch 12,
**dadurch gekennzeichnet, dass** unmittelbar nach dem Erzeugen der Mikrostruktur (19) der Kernoberfläche (18) die Verschleißschutzschicht (17) aufgebracht wird.

14. Verfahren nach einem der Ansprüche 12 oder 13, **dadurch gekennzeichnet, dass** das Beschichten mit der Verschleißschutzschicht (17) durch ein elektrochemisches Abscheiden erfolgt.

## Claims

1. A textile machine tool part (11) having a tool core (16) that consists of a core material,
wherein at least in one section, the tool core (16) comprises a core surface (18) having a microstructure, which has been created by electrochemical etching, wherein the tool core (16) is used as anode in a bath of chromic acid solution having 50-300 g chromium trioxide per liter, a dwell time of the tool core (16) in the bath is between 10 seconds up to 1800 seconds depending on the depth or height of the depressions (20) and the elevations (21) of the microstructure (19) to be produced, at a temperature of 20°C to 60°C, a current density of 20-40 A/dm² and an etching duration of 30 seconds to 1200 seconds,
wherein the depressions (20) and the elevations (21) of the microstructure (19) of the core surface (18) adjoin one another, wherein the elevations (21) in the region of their respective maximum and the depressions (20) in the region of their respective minimum have a spherical surface segment-shaped contour, wherein with view on the core surface the depressions are deepened in a concave manner in relation to a reference plane, while the elevations are elevated in a convex manner in relation to this reference plane, wherein the diameter of each depression and each elevation is a maximum of 50-60 pm and wherein the distance of the minima of the depressions from the maxima of directly adjacent elevations is a minimum of 10-20 µm and a maximum of 40-60 µm,
wherein the core surface (18) with the microstructure (19) is at least partly coated with a wear-resistant coating (17) that has a layer thickness (d) of at most 20 µm and wherein the wear-resistant coating (17) also comprises a microstructure (22), due to the microstructure (19) of the core surface (18).

2. Textile machine tool part according to claim 1, **characterized in that** the depressions and elevations of the microstructure (19) of the core surface (18) each have a radius of minimum 5-10 µm and maximum 20-30 pm.

3. Textile machine tool part according to claim 1 or 2, **characterized in that** the layer thickness (d) of the wear-resistant coating (17) is at most 10 µm or at most 7 pm.

4. Textile machine tool part according to claim 1 to 3, **characterized in that** the layer thickness (d) of the wear-resistant coating (17) within a considered surface area of 1 mm² varies by a maximum of 1 pm.

5. Textile machine tool part according to any of the preceding claims,
**characterized in that** the layer thickness (d) of the wear-resistant coating (17) is at least 2 pm.

6. Textile machine tool part according to any of the preceding claims,
**characterized in that** the wear-resistant coating (17) is a chromium coating or a DLC coating or a carbidic coating or a nitridic coating and/or that the core material is formed from a metal material or a metal alloy.

7. Textile machine tool part according to any of the preceding claims,
**characterized in that** the microstructure (22) of the wear-resistant coating (17) has elevations (21, 24) and depressions (20, 23), wherein the elevations (21, 24) in the region of their maximum, and/or the depressions (20, 23) in the region of their minimum, have an approximately spherical surface segment-shaped contour.

8. Textile machine tool part according to claim 7, **characterized in that** the radius (R2, R4) of a spherical surface segment-shaped contour of a first or second elevation (21, 24) is greater than the radius (R1, R3) of a spherical surface segment-shaped contour of a first or second depression (20, 23).

9. Use of the textile machine tool part (10) according to any of the preceding claims in a textile machine during a method for producing or processing a textile material with at least one elastane yarn that comes into contact with the textile machine tool part (10).

10. Use of the textile machine tool part (10) according to claim 9,
**characterized in that** the fineness of the at least one elastane yarn is at least 20 den or 22 dtex.

11. Use of the textile machine tool part (10) according to claim 9 or 10,
**characterized in that** the fineness of the at least one elastane yarn is at most 40 den or 44 dtex.

12. Method for producing a textile machine tool part having the following steps:
- Production of a tool core (16) from a core material,
- Creation of a microstructure (19) in at least one section of the core surface (28) of the tool core (16), being produced by an electrochemical etching method, wherein the tool core (16) is used as anode in a bath of chromic acid solution having 50-300 g chromium trioxide per liter, a dwell time of the tool core (16) in the bath is between 10 seconds up to 1800 seconds depending on a depth or height of the depressions (20) and elevations (21) of the microstructure (19) to be produced, at a temperature of 20°C to 60°C, a current density of 20-40 A/dm² and an etching duration of 30 seconds to 1200 seconds, wherein the depressions (20) and the elevations (21) of the microstructure (19) of the core surface (18) adjoin one another, wherein the elevations (21) in the region of their respective maximum and the depressions (20) in the region of their respective minimum have a spherical surface segment-shaped contour, wherein with view on the core surface the depressions are configured to be deepened in relation to a reference plane in a concave manner, while the elevations are elevated in a convex manner in relation to this reference plane, wherein the diameter of a depression and/or an elevation is a maximum of 50-60 pm and wherein the distance of the minima of the depressions from the maxima of directly adjacent elevations is minimum 10-20 µm and maximum 40-60 µm,
- and at least partly coating of the core surface (18) having the microstructure (19) with a wear-resistant coating (17) that has a layer thickness (d) of at most 20 µm such that the wear-resistant coating (17), due to the microstructure (19) of the core surface (18), also has a microstructure (22).

13. Method according to claim 12,
**characterized in that** the wear-resistant coating (17) is applied immediately after the microstructure (19) of the core surface (18) is created.

14. Method according to any of claims 12 or 13, **characterized in that** coating with the wear-resistant coating (17) is accomplished using electrochemical deposition.

## Revendications

1. Partie d'outil de machine textile (11) présentant un noyau d'outil (16) qui est constitué d'un matériau de noyau,
le noyau d'outil (16) présentant, au moins dans une portion, une surface de noyau (18) dotée d'une microstructure (19) qui a été réalisée selon un procédé de gravure électrochimique, sachant que le noyau d'outil (16) est utilisé comme anode dans un bain de solution d'acide chromique avec 50 à 300 g de trioxyde de chrome par litre, qu'un temps de séjour du noyau d'outil (16) dans le bain est compris entre 10 secondes et 1 800 secondes, en fonction d'une profondeur ou d'une hauteur à réaliser pour des creux (20) et des saillies (21) de la microstructure (19), à une température allant de 20 °C à 60 °C, avec une densité de courant de 20 à 40 A/dm² et une durée de gravure allant de 30 secondes à 1 200 secondes,
les creux (20) et les saillies (21) de la microstructure (19) de la surface de noyau (18) se raccordant les uns aux autres, sachant que les saillies (21), dans la région de leur maximum respectif, et les creux (20), dans la région de leur minimum respectif, présentent un contour en forme de portion de surface sphérique, les creux, considérés par rapport à la surface de noyau, étant réalisés sous une forme concave en retrait par rapport à un plan de référence, tandis que les saillies s'élèvent sous une forme convexe par rapport à ce plan de référence, le diamètre de chaque creux et de chaque saillie étant au maximum de 50 à 60 µm, et la distance des minimums des creux par rapport aux maximums des saillies directement voisines étant au moins de 10 à 20 µm et au maximum de 40 à 60 µm,
la surface de noyau (18), comportant la microstructure (19), étant revêtue au moins en partie d'une couche de protection contre l'usure (17) qui présente une épaisseur de couche (d) d'au maximum 20 µm, et la couche de protection contre l'usure (17), en raison de la microstructure (19) de la surface de noyau (18), présentant également une microstructure (22).

2. Partie d'outil de machine textile selon la revendication 1, **caractérisée en ce que** les creux et les saillies de la microstructure (19) de la surface de noyau (18) présentent respectivement un rayon d'au minimum 5 à 10 µm et d'au maximum 20 à 30 µm.

3. Partie d'outil de machine textile selon la revendication 1 ou 2, **caractérisée en ce que** l'épaisseur de couche (d) de la couche de protection contre l'usure (17) est au maximum de 10 µm ou au maximum de 7 µm.

4. Partie d'outil de machine textile selon une des revendications 1 à 3, **caractérisée en ce que** l'épaisseur de couche (d) de la couche de protection contre l'usure (17) varie d'au maximum 1 µm à l'intérieur d'une surface considérée de 1 mm².

5. Partie d'outil de machine textile selon une des revendications précédentes, **caractérisée en ce que** l'épaisseur de couche (d) de la couche de protection contre l'usure (17) est d'au moins 2 µm.

6. Partie d'outil de machine textile selon une des revendications précédentes, **caractérisée en ce que** la couche de protection contre l'usure (17) est une couche de chrome ou une couche DLC ou une couche de carbure ou une couche de nitrure et/ou **en ce que** le matériau du noyau est constitué d'un matériau métallique ou d'un alliage métallique.

7. Partie d'outil de machine textile selon une des revendications précédentes, **caractérisée en ce que** la microstructure (22) de la couche de protection contre l'usure (17) comporte des saillies (21, 24) et des creux (20, 23), sachant que les saillies (21, 24), dans la région de leur maximum respectif, et les creux (20, 23), dans la région de leur minimum respectif, présentent un contour en forme de portion de surface sphérique.

8. Partie d'outil de machine textile selon la revendication 7, **caractérisée en ce que** le rayon (R2, R4) d'un contour en forme de portion de surface sphérique d'une première ou d'une deuxième saillie (21, 24) est supérieur au rayon (R1, R3) d'un contour en forme de portion de surface sphérique d'un premier ou d'un deuxième creux (20, 23).

9. Utilisation de la partie d'outil de machine textile (10) selon une des revendications précédentes, dans une machine textile lors d'un procédé de fabrication ou de traitement d'une matière textile comprenant au moins un fil d'élasthanne qui entre en contact avec la partie d'outil de machine textile (10).

10. Utilisation de la partie d'outil de machine textile (10) selon la revendication 9, **caractérisée en ce que** le fil d'élasthanne, au nombre d'au moins un, présente une finesse d'au moins 20 den ou 22 dtex.

11. Utilisation de la partie d'outil de machine textile (10) selon la revendication 9 ou 10, **caractérisée en ce que** le fil d'élasthanne, au nombre d'au moins un, présente une finesse d'au maximum 40 den ou 44 dtex.

12. Procédé de fabrication d'une partie d'outil de machine textile, comprenant les étapes suivantes :
- fabrication d'un noyau d'outil (16) à partir d'un matériau de noyau,
- réalisation d'une microstructure (19), au moins dans une portion de la surface de noyau (28) du noyau d'outil (16), qui a été réalisée par un procédé de gravure électrochimique, sachant que le noyau d'outil (16) est utilisé comme anode dans un bain de solution d'acide chromique avec 50 à 300 g de trioxyde de chrome par litre, qu'un temps de séjour du noyau d'outil (16) dans le bain est compris entre 10 secondes et 1 800 secondes, en fonction d'une profondeur ou d'une hauteur à réaliser pour des creux (20) et des saillies (21) de la microstructure (19), à une température allant de 20 °C à 60 °C, avec une densité de courant de 20 à 40 A/dm² et une durée de gravure allant de 30 secondes à 1 200 secondes, les creux (20) et les saillies (21) de la microstructure (19) de la surface de noyau (18) se raccordant les uns aux autres, sachant que les saillies (21), dans la région de leur maximum respectif, et les creux (20), dans la région de leur minimum respectif, présentent un contour en forme de portion de surface sphérique, les creux, considérés par rapport à la surface de noyau, étant réalisés sous une forme concave en retrait par rapport à un plan de référence, tandis que les saillies s'élèvent sous une forme convexe par rapport à ce plan de référence, le diamètre d'un creux et/ou d'une saillie étant au maximum de 50 à 60 µm, et la distance des minimums des creux par rapport aux maximums des saillies directement voisines étant au moins de 10 à 20 µm et au maximum de 40 à 60 µm,
- et recouvrement, au moins partiel, de la surface de noyau (18), comportant la microstructure (19), avec une couche de protection contre l'usure (17) qui présente une épaisseur de couche (d) d'au maximum 20 µm, de manière à ce que, en raison de la microstructure (19) de la surface de noyau (18), la couche de protection contre l'usure (17) présente également une microstructure (22).

13. Procédé selon la revendication 12, **caractérisé en ce que**, immédiatement après la réalisation de la microstructure (19) de la surface de noyau (18), on applique la couche de protection contre l'usure (17).

14. Procédé selon une des revendications 12 ou 13, **caractérisé en ce que** le revêtement avec la couche de protection contre l'usure (17) s'effectue par le biais d'un dépôt électrochimique.
